(19) Europäisches Patentamt
European Patent Office
Office européen des brevets

(11) **EP 4 376 255 A1**

(12) **EUROPEAN PATENT APPLICATION**
published in accordance with Art. 153(4) EPC

(43) Date of publication:
**29.05.2024 Bulletin 2024/22**

(21) Application number: **22845036.7**

(22) Date of filing: **14.06.2022**

(51) International Patent Classification (IPC):
**H02J 7/34** (2006.01)     **H02J 7/00** (2006.01)

(52) Cooperative Patent Classification (CPC):
**H01M 10/44; H01M 10/48; H02J 7/00; H02J 7/34;
Y02E 60/10**

(86) International application number:
**PCT/CN2022/098774**

(87) International publication number:
**WO 2023/000869 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **22.07.2021   CN 202110832887**

(71) Applicant: **ZTE Corporation
Shenzhen, Guangdong 518057 (CN)**

(72) Inventors:
 • **HU, Tiantian
  Shenzhen, Guangdong 518057 (CN)**

 • **TU, Darui
  Shenzhen, Guangdong 518057 (CN)**
 • **YANG, Peng
  Shenzhen, Guangdong 518057 (CN)**
 • **HUANG, Falong
  Shenzhen, Guangdong 518057 (CN)**
 • **DAI, Xinjian
  Shenzhen, Guangdong 518057 (CN)**
 • **LI, Wenjie
  Shenzhen, Guangdong 518057 (CN)**

(74) Representative: **Novagraaf Technologies
Bâtiment O2
2, rue Sarah Bernhardt
CS90017
92665 Asnières-sur-Seine Cedex (FR)**

(54) **BATTERY CURRENT SHARING METHOD, ELECTRONIC DEVICE, AND COMPUTER READABLE STORAGE MEDIUM**

(57)     The present disclosure relates to the field of energy storage technologies, and provides a current sharing method for a battery (11), an electronic device, and a computer readable storage medium. The method includes: acquiring state parameters of battery packs (1) connected in parallel; comparing the state parameters of the battery packs (1) to obtain a comparison result; in a case where the state parameters of the battery packs (1) match, performing current sharing control on the battery packs based on a master-slave current sharing mode; and in a case where the state parameters of the battery packs (1) do not match, performing current sharing control on the battery packs based on a proportional current sharing mode.

Fig. 1

## Description

### Cross-Reference to Related Application

This application is based upon and claims priority to Chinese Patent Application No. 202110832887.0, filed on July 22, 2021, the entire disclosure of which is incorporated herein by reference.

### Technical Field

Embodiments of the present disclosure relate to the field of energy storage technologies, and in particular, to a battery current sharing method, an electronic device, and a computer readable storage medium.

### Background

With the increasing demand of users for electricity consumption, the market demand for high endurance and high-capacity energy storage batteries is also increasing. The method of connecting multiple battery packs in parallel increases the total electricity storage capacity of the energy storage batteries, and gradually becomes a main direction of research and development of the energy storage batteries.

In a case where multiple battery packs operate in parallel, the electrical energy released by the battery packs in the discharging process is the same, however, the capacities of various battery packs for storing electric energy are usually different, for example, the capacities of new and old battery packs for storing electric energy are greatly different, a new battery pack may store more electric energy, and an old battery pack may store less energy. If new and old battery packs release the same electric energy, the new battery cannot be fully discharged, while the old battery has been over-discharged. However, if the battery packs cannot be fully discharged or are over-discharged for a long time, deterioration of the battery packs will be constantly exacerbated, thereby shortening the lives of the battery packs. Since it is generally difficult to identify which battery packs have been deteriorated or even damaged, the whole apparatus with a plurality of battery packs connected in parallel can only be replaced as a whole, thus, a large amount of waste is caused, and the maintenance cost is high.

### Summary

The embodiments of the present disclosure provide a battery current sharing method, including: acquiring state parameters of battery packs connected in parallel; comparing the state parameters of the battery packs to obtain a comparison result; in a case where the state parameters of the battery packs match, performing current sharing control on the battery packs based on a master-slave current sharing mode; and in a case where the state parameters of the battery packs do not match, performing current sharing control on the battery packs based on a proportional current sharing mode.

The embodiments of the present disclosure further provide an electronic device, including: at least one processor; and a memory communicatively coupled to the at least one processor; wherein the memory stores an instruction that is able to be executed by the at least one processor, and the instruction, when executed by the at least one processor, causes the at least one processor to execute the battery current sharing method.

The embodiments of the present disclosure further provide a computer readable storage medium, which stores a computer program, wherein the computer program, when being executed by a processor, causes the processor to execute the battery current sharing method.

### Brief Description of the Drawings

Fig. 1 is a schematic block diagram of battery packs and a busbar according to an embodiment of the present disclosure;

Fig. 2 is a first flowchart of a battery current sharing method according to an embodiment of the present disclosure;

Fig. 3 is a second flowchart of a battery current sharing method according to an embodiment of the present disclosure;

Fig. 4 is a third flowchart of a battery current sharing method according to an embodiment of the present disclosure; and

Fig. 5 is a block diagram of an electronic device according to an embodiment of the present disclosure.

### Detailed Description

To make the objectives, technical solutions, and advantages of the embodiments of the present disclosure clearer, the following describes respective embodiments of the present disclosure in detail with reference to the accompanying drawings. However, a person having ordinary skill in the art may understand that, in the embodiments of the present disclosure, many technical details are described to help a reader understand the present disclosure better. However, even without these technical details or even making various changes and modifications based on the following embodiments, the claimed technical solutions of the present disclosure can still be implemented. The division of the following embodiments is for convenience of description, and shall not constitute any limitation to exemplary implementations of the present disclosure. The embodiments may be referred to in combination with each other without any contradiction.

The embodiments of the present disclosure propose a battery current sharing method, an electronic device, and a computer readable storage medium. By dynamically adjusting current sharing between battery packs, the problem of battery pack degradation caused by excessive discharging or insufficient discharging of the battery packs is solved, the service life of the battery packs is prolonged, resources are saved, and maintenance costs are reduced.

According to the embodiments of the present disclosure, an electronic device acquires state parameters of battery packs connected in parallel, compares the state parameters of the battery packs; in a case where the state parameters of the battery packs match, performs current sharing control on the battery packs based on a master-slave current sharing mode, and in a case where the state parameters of the battery packs do not match, performs current sharing control on the battery packs based on a proportional current sharing mode. In the technical solution of the embodiments of the present disclosure, whether a master-slave current sharing mode or a proportional current sharing mode is used to perform current sharing control on the battery packs is dynamically selected according to the state parameters of respective battery packs, thereby solving the problem of battery pack degradation caused by excessive discharging or insufficient discharging of the battery packs, prolonging the service life of the battery pack, saving resources, and reducing maintenance costs.

An embodiment of the present disclosure relates to a battery current sharing method for dynamically adjusting current sharing between battery packs. The implementation details of the battery current sharing method in this embodiment are described in detail in the following. The following content is only for ease of understanding and is not essential for implementing this solution.

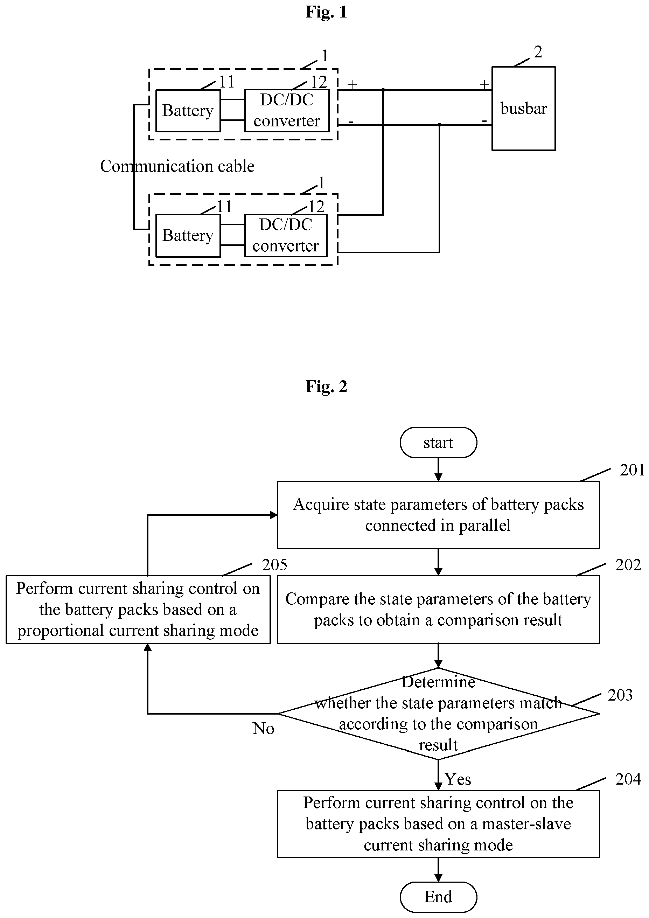

The application scenarios of the embodiments of the present disclosure may include, but are not limited to, the following descriptions. Referring to Fig. 1, each battery pack 1 includes a battery 11 and a DC/DC converter 12 connected to the battery 11. The battery 11 may be various types of batteries, such as a lithium battery or a lead acid battery. The DC/DC converter 12 is integrated with functions such as data collection, control, and communication, and can adjust the magnitude of a voltage/current output by the battery 11. The battery packs 1 are connected in parallel through a busbar 2. For example, the positive electrodes of the battery packs 1 are all connected to the positive electrode of the busbar 2, and the negative electrodes of the battery packs 1 are all connected to the negative electrode of the busbar 2.

An exemplary procedure of the battery current sharing method in this embodiment may be as shown in Fig. 2, including the following operations 201 to 205.

At operation 201, state parameters of battery packs connected in parallel are acquired.

In some exemplary implementations, the battery packs are connected by using a communication cable, so that the battery packs can transmit at least one state parameter of each battery pack to each other. The communication cable may be a CAN/485/SCI, or the like. The state parameter may include at least one of: a residual capacity, and an output voltage.

In an embodiment, the battery current sharing method is executed by a DC/DC converter in one of the battery packs. The battery pack in which the DC/DC converter that executes the battery current sharing method is located is used as a master module, and other battery packs except the master module in the battery packs are used as slave modules. In some exemplary implementations, the master module may be generated by means of competition between the battery packs. For example, a battery pack may be randomly selected as the master module, or a preset battery pack is selected as the master module, or a battery pack with the maximum residual capacity of the battery is selected as the master module, or a battery pack that is firstly powered on is selected as the master module, but the implementation is not limited thereto.

In an embodiment, the DC/DC converter in the master module collects at least one battery parameter of the battery in the master module, and receives, from the DC/DC converter in each slave module, at least one state parameter of the battery in each slave module, wherein the at least one state parameter of the battery in each slave module is collected by the DC/DC converter in the corresponding slave module.

At operation 202, the state parameters of the battery packs are compared to obtain a comparison result.

At operation 203, whether the state parameters of the battery packs match is determined according to the comparison result, and in a case where the state parameters of the battery packs match, the flow proceeds to operation 204; otherwise, the flow proceeds to operation 205.

In some exemplary implementations, whether the state parameters of the battery packs are the same is determined according to the comparison result. For example, whether the residual capacity and the output voltage of each battery pack are correspondingly equal within an allowable error range is determined; if so, it can be considered that the state parameters of the battery packs match, and if not, it can be considered that the state parameters of the battery packs do not match.

At operation 204, current sharing control is performed on the battery packs based on a master-slave current sharing mode.

In an embodiment, an exemplary implementation of performing current sharing control on the battery packs based on the master-slave current sharing mode by the master module is provided. In a case where the state parameters of the battery packs match, the DC/DC converter in the master module sends a reference current to all the slave modules, an output current of each slave module is compared with the reference current to obtain a current difference; the DC/DC converter of each slave module is provided with a control unit for performing current inner loop control, and performs current sharing control according to the current difference, and finally, the various slave modules achieves current sharing with the master module. The reference current may alternatively be set by a person having ordinary skill in the art according to requirements.

For example, in a case where the output current of each battery pack required by the battery is 56A, the reference current may be set to 56A. In this case, in a case where the DC/DC converter in the master module sends the reference current 56A to all slave modules, the output current of each slave module is compared with the reference current 56A, and the DC/DC converter in the slave module performs adjusted until the output current of the slave module becomes 56A.

In an embodiment, the at least one state parameter of each slave module includes the output current of the corresponding slave module, and the master module may acquire the output current of each slave module by acquiring the state parameter of each slave module. In another embodiment, the output current of each slave module is collected by the DC/DC converter in the corresponding slave module, and the DC/DC converter in the master module respectively acquires the output current of each slave module from the DC/DC converter in each slave module.

At operation 205, current sharing control is performed on the battery packs based on a proportional current sharing mode, and then the flow returns to operation 201.

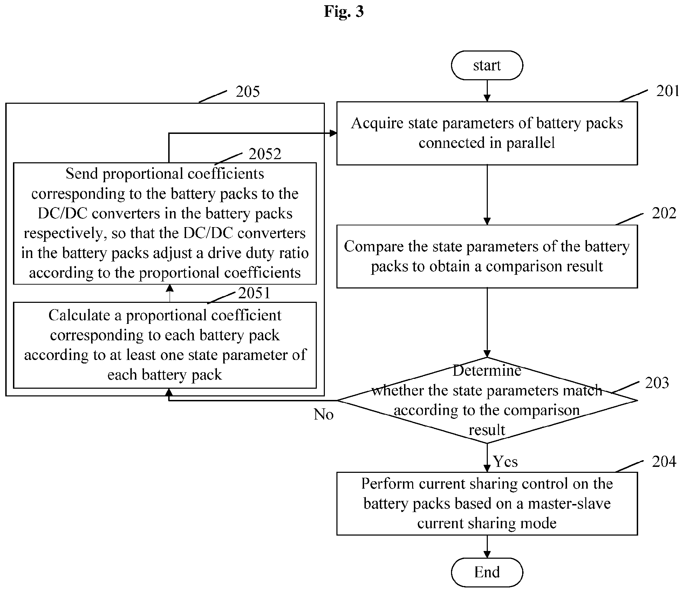

In an embodiment, as shown in Fig. 3, the operation 205 further includes sub-operations 2051 and 2052.

At sub-operation 2051, a proportional coefficient corresponding to each battery pack is calculated according to at least one state parameter of the battery pack.

At sub-operation 2052, the proportional coefficient corresponding to the battery pack is sent to the DC/DC converter in the battery pack, so that the DC/DC converter in the battery pack adjusts the drive duty ratio according to the proportional coefficient, and then the flow returns to operation 201.

In some exemplary implementations, in a case where the state parameters of the battery packs do not match, the DC/DC converter in the master module calculates a proportional coefficient corresponding to each battery pack according to at least one state parameter of the battery pack, in other words, the driving duty ratio of the DC/DC converter in the battery pack is calculated, and the calculated proportional coefficients corresponding to the battery packs are sent to the DC/DC converters in the respective battery packs, so that the DC/DC converters in the respective battery packs adjust the drive duty ratio according to the proportional coefficients obtained by calculation. The solution ensures that a battery with a larger residual capacity or a larger output voltage has a larger load capacity and discharges a larger amount of electricity, and a battery with a smaller residual capacity or a smaller output voltage has a smaller load capacity and discharges a smaller amount of electricity, so as to achieve proportional current sharing between battery packs, and finally maintain the residual capacity of the batteries of the battery packs to be basically consistent, until the state parameters of the battery packs match, the master module performs current sharing control on the battery packs based on the master-slave current sharing mode.

In an embodiment, the at least one state parameter and the proportional coefficient are in a positive relationship, i.e. the at least one state parameter is in a positive ratio with the proportional coefficient. In some exemplary implementations, the proportional coefficient may be calculated as follows: $K_j=f(a_1* M_{1j}+a_2* M_{2j}+a_3* M_{3j}......a_i* M_{ij})$, wherein $K_j$ is the proportional coefficient of the jth battery pack, $M_{ij}$ is the ith state parameter of the jth battery pack, and $a_i$ is a weight of the ith state parameter, where j is an integer greater than or equal to 2, and i is an integer greater than or equal to 1.

In an embodiment, the proportional coefficient may be calculated as follows: $K_j=f(a_i* C_{1j}+a_2* C_{2j}+a_3* C_{3j}......a_i* C_{ij}+b_1* V_{1j}+b_2* V_{2j}+b_3* V_{3j}......b_i* V_{ij})$, wherein $K_j$ is the proportional coefficient of the jth battery pack, $C_{ij}$ is the ith residual capacity of the jth battery pack, $a_i$ is a weight of the ith residual capacity, $V_{ij}$ is the ith output voltage of the jth battery pack, and bi is a weight of the ith output voltage, where j is an integer greater than or equal to 2, and i is an integer greater than or equal to 1. In a case where only the residual capacities in the state parameters of the battery packs are different, bi is equal to 0; in a case where only the output voltages in the state parameters of the battery packs are different, $a_i$ is equal to 0; and in a case where the residual capacities and the output voltages in the state parameters of the battery packs are different, at least one weight in $a_i$ is not equal to 0, and at least one weight in bi is not equal to 0.

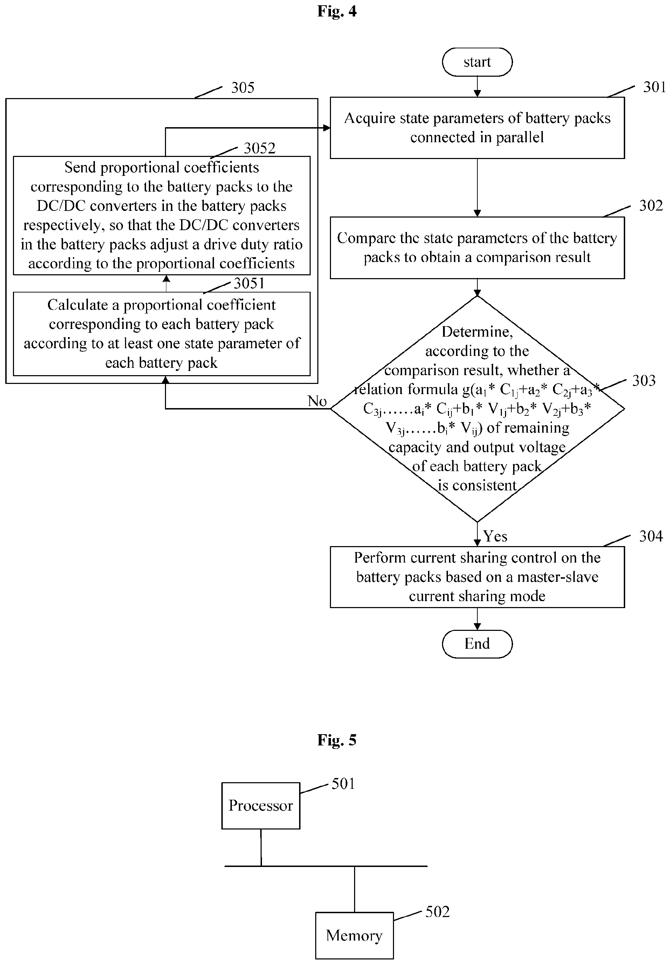

In an embodiment, referring to Fig. 4, the operations 201, 202, 204, and 205 are substantially the same as the operations 301, 302, 304, and 305, and are not described herein again. The difference lies in the operation 303.

At operation 303, whether a relation formula $g(a_1* C_{1j}+a_2* C_{2j}+a_3* C_{3j}......a_i* C_{ij}+b_1* V_{1j}+b_2* V_{2j}+b_3* V_{3j}......b_i* V_{ij})$ of the residual capacity and the output voltage of each battery pack is consistent is determined according to the comparison result.

In some exemplary implementations, after collecting the residual capacity and the output voltage sent by all the slave modules, the master module determines whether a relation formula $g(a_1* C_{1j}+a_2* C_{2j}+a_3* C_{3j}......a_i* C_{ij}+b_1* V_{1j}+b_2* V_{2j}+b_3* V_{3j}......b_i* V_{ij})$ of the residual capacity and the output voltage of all the battery packs is consistent. In other words, the master module in the present embodiment not only determines whether or not the residual capacity and the output voltage of all the battery packs match at a given time, but also determines whether the residual capacity and the output voltage of all battery packs are consistent within a certain period of time. In this way, accuracy of determination is improved, and reliability of the battery current sharing method is further improved.

In this embodiment, the electronic device acquires state parameters of battery packs connected in parallel, compares the state parameters of the battery packs; in a case where the state parameters of the battery packs match, performs current sharing control on the battery packs based on a master-slave current sharing mode, and in a case where the state parameters of the battery packs do not match, performs current sharing control on the battery packs based on a proportional current sharing mode. In the technical solution of the embodiments of the present disclosure, whether a master-slave current sharing mode or a proportional current sharing mode is used to perform current sharing control on the battery packs is dynamically selected according to the state parameters of respective battery packs, thereby solving the problem of battery pack degradation caused by excessive discharging or insufficient discharging of the battery packs, prolonging the service life of the battery pack, saving resources, and reducing maintenance costs.

It should be noted that all modules involved in this embodiment are logic modules. In a practical application, one logic unit may be implemented by one physical unit or a part of one physical unit, and may also be implemented by using a combination of a plurality of physical units. In addition, in order to highlight the innovation part of the present disclosure, the present embodiment does not introduce units less closely related to solving the technical problem proposed in the present disclosure, but this does not indicate that other units do not exist in the present embodiment.

Another embodiment of the present disclosure relates to an electronic device. As shown in Fig. 5, the electronic device includes: at least one processor 501; and a memory 502 communicatively connected to the at least one processor 501, wherein the memory 502 stores an instruction that is able to be executed by the at least one processor 501, and the instruction, when being executed by the at least one processor 501, causes the at least one processor 501 to execute the battery current sharing method in each of the foregoing embodiments.

The memory 502 and the at least one processor 501 are connected via a bus, the bus may include any number of interconnected buses and bridges, and the bus connects various circuits of the at least one processor 501 and the memory 502. The bus may also connect a variety of other circuits, such as peripheral devices, voltage regulators, and power management circuitry, which are well known in the art and therefore are not described further herein. The bus interface provides an interface between the bus and the transceiver. A transceiver may be one element or multiple elements, such as multiple receivers and transmitters, that provide a means for communicating with various other devices over a transmission medium. The data processed by the at least one processor 501 is transmitted on a wireless medium through an antenna, and further, the antenna receives the data and transmits the data to the at least one processor 501.

The at least one processor 501 is responsible for managing a bus and general processing, and may further provide various functions, including timing, peripheral interfaces, voltage regulation, power management, and other control functions. The memory 502 may be used to store data used by the at least one processor 501 in performing operations.

Another embodiment of the present disclosure relates to a computer readable storage medium, which stores a computer program. The computer program, when being executed by a processor, causes the processor to execute the foregoing method embodiments.

That is, a person having ordinary skill in the art may understand that all or a part of the operations of the methods in the foregoing embodiments may be implemented by a program instructing relevant hardware. The program is stored in a storage medium and includes several instructions for instructing a device (which may be a single chip, a chip, or the like) or a processor to execute all or a part of the operations of the methods in the embodiments of the present disclosure. The foregoing storage medium includes: any medium that can store program codes, such as a Universal Serial Bus (USB) flash disk, a removable hard disk, a Read-Only Memory (ROM), a Random Access Memory (RAM), a magnetic disk, or an optical disk.

A person having ordinary skill in the art may understand that the foregoing embodiments are exemplary embodiments for implementing the present disclosure, and in practical applications, various changes may be made in form and details without departing from the principle and scope of the present disclosure.

**Claims**

1. A battery current sharing method, comprising:

     acquiring state parameters of battery packs connected in parallel;
     comparing the state parameters of the battery packs to obtain a comparison result;
     in a case where the state parameters of the battery packs match, performing current sharing control on the battery packs based on a master-slave current sharing mode; and
     in a case where the state parameters of the battery packs do not match, performing current sharing control on the battery packs based on a proportional current sharing mode.

2. The battery current sharing method according to claim 1, wherein performing the current sharing control on the battery packs based on the proportional current sharing mode comprises:

   calculating, according to at least one state parameter of each battery pack, a proportional coefficient corresponding to the battery pack, wherein the proportion coefficient refers to a driving duty ratio of a Direct Current-to-Direct Current, DC/DC, converter in the battery pack; and
   sending the proportional coefficient corresponding to the battery pack to the DC/DC converter in the battery pack, so that the DC/DC converter in the battery pack adjusts the drive duty ratio according to the proportional coefficient.

3. The battery current sharing method according to claim 2, wherein the at least one state parameter and the proportional coefficient are in a positive relationship, and the proportional coefficient is calculated as follows:

$$K_j = f(a_1 * M_{1j} + a_2 * M_{2j} + a_3 * M_{3j} \ldots \ldots a_i * M_{ij}),$$

   wherein $K_j$ is the proportional coefficient of the jth battery pack, $M_{ij}$ is the ith state parameter of the jth battery pack, and $a_i$ is a weight of the ith state parameter, where j is an integer greater than or equal to 2, and i is an integer greater than or equal to 1.

4. The battery current sharing method according to any one of claims 1 to 3, wherein each battery pack comprises a battery and a Direct Current-to-Direct Current, DC/DC, converter connected to the battery, and the battery current sharing method is executed by the DC/DC converter in one of the battery packs.

5. The battery current sharing method according to claim 4, wherein the battery pack in which the DC/DC converter that executes the battery current sharing method is located is used as a master module, and other battery packs except the master module in the battery packs are used as slave modules;
   acquiring the state parameters of the battery packs connected in parallel comprises:
   collecting, by the DC/DC converter in the master module, at least one battery parameter of the battery in the master module, and receiving, by the DC/DC converter in the master module from the DC/DC converter in each slave module, at least one state parameter of the battery in each slave module, wherein the at least one state parameter of the battery in each slave module is collected by the DC/DC converter in the corresponding slave module.

6. The battery current sharing method according to claim 5, wherein performing the current sharing control on the battery packs based on the master-slave current sharing mode comprises:

   calculating, by the DC/DC converter in the master module, a current difference corresponding to each slave module, wherein the current difference corresponding to each slave module refers to a difference value between an output current of the slave module and a reference current sent by the master module to the slave module; and
   sending the current difference corresponding to each slave module to the DC/DC converter in the corresponding slave module, so that the DC/DC converter in the corresponding slave module performs the current sharing control according to the current difference.

7. The battery current sharing method according to claim 6, wherein the at least one state parameter of each slave module comprises the output current of the corresponding slave module; or,
   in a case where the state parameters of the battery packs match, and before performing the current sharing control on the battery packs based on the master-slave current sharing mode, the method further comprises:
   respectively acquiring, by the DC/DC converter in the master module, the output current of each slave module from the DC/DC converter in each slave module, wherein the output current of each slave module is collected by the DC/DC converter in the corresponding slave module.

8. The battery current sharing method according to any one of claims 1 to 7, wherein the state parameter comprises at least one of: a residual capacity, and an output voltage.

9. An electronic device, comprising:

   at least one processor; and
   a memory communicatively coupled to the at least one processor;
   wherein the memory stores an instruction that is able to be executed by the at least one processor, and the instruction, when executed by the at least one processor, causes the at least one processor to execute the battery current sharing method according to any one of claims 1 to 8.

10. A computer readable storage medium, storing a computer program, wherein the computer program, when being executed by a processor, causes the processor to execute the battery current sharing method according to any one of claims 1 to 8.

**Fig. 1**

**Fig. 2**

**Fig. 3**

```
                                              ┌─────────┐
                                              │  start  │
                                              └────┬────┘
                                                   │
              ┌─ 205                               ▼                    ┌─ 201
┌──────────────────────────────────┐   ┌────────────────────────────────┐
│                                   │   │ Acquire state parameters of     │
│         ┌─ 2052                   │   │ battery packs                   │
│  ┌─────────────────────────────┐  │   │ connected in parallel           │
│  │ Send proportional           │◄─┼───┤                                 │
│  │ coefficients                │  │   └────────────────┬───────────────┘
│  │ corresponding to the        │  │                    │
│  │ battery packs to the        │  │                    ▼            ┌─ 202
│  │ DC/DC converters in the     │  │   ┌────────────────────────────────┐
│  │ battery packs               │  │   │ Compare the state parameters   │
│  │ respectively, so that the   │  │   │ of the battery                 │
│  │ DC/DC converters            │  │   │ packs to obtain a comparison    │
│  │ in the battery packs adjust │  │   │ result                          │
│  │ a drive duty ratio          │  │   └────────────────┬───────────────┘
│  │ according to the            │  │                    │
│  │ proportional coefficients   │  │                    ▼
│  └─────────────────────────────┘  │              Determine
│            ▲      ┌─ 2051          │         whether the state      ┌─ 203
│  ┌─────────┴───────────────────┐  │         parameters match
│  │ Calculate a proportional    │  │  No ◄── according to the
│  │ coefficient                 │  │         comparison result
│  │ corresponding to each       │  │                    │
│  │ battery pack                │  │                    │ Yes      ┌─ 204
│  │ according to at least one   │  │                    ▼
│  │ state parameter of          │  │   ┌────────────────────────────────┐
│  │ each battery pack           │◄─┼───┤ Perform current sharing control│
│  └─────────────────────────────┘  │   │ on the                          │
│                                   │   │ battery packs based on a       │
└───────────────────────────────────┘   │ master-slave                    │
                                         │ current sharing mode            │
                                         └────────────────┬───────────────┘
                                                          │
                                                          ▼
                                                     ┌─────────┐
                                                     │   End   │
                                                     └─────────┘
```

**Fig. 4**

start

305

301 — Acquire state parameters of battery packs connected in parallel

3052 — Send proportional coefficients corresponding to the battery packs to the DC/DC converters in the battery packs respectively, so that the DC/DC converters in the battery packs adjust a drive duty ratio according to the proportional coefficients

302 — Compare the state parameters of the battery packs to obtain a comparison result

3051 — Calculate a proportional coefficient corresponding to each battery pack according to at least one state parameter of each battery pack

303 — Determine, according to the comparison result, whether a relation formula $g(a_1 * C_{1j}+a_2 * C_{2j}+a_3 * C_{3j}......a_i * C_{ij}+b_1 * V_{1j}+b_2 * V_{2j}+b_3 * V_{3j}......b_i * V_{ij})$ of remaining capacity and output voltage of each battery pack is consistent

No

Yes

304 — Perform current sharing control on the battery packs based on a master-slave current sharing mode

End

**Fig. 5**

501 — Processor

502 — Memory

## INTERNATIONAL SEARCH REPORT

| International application No. |
|---|
| **PCT/CN2022/098774** |

**A. CLASSIFICATION OF SUBJECT MATTER**

H02J 7/34(2006.01)i; H02J 7/00(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

WPABSC; CNTXT; CNABS; ENTXTC; CNKI; IEEE: 电池, 状态, 电流差, 主从, 均流, 并联, 差异, 荷电状态, 参数, 比例, 不一致, 均衡, 占空比, 偏差, 比例, battery, state, soc, DC, Master-slave, Current sharing, duty cycle, parallel, balance, Proportion, deviation,

**C. DOCUMENTS CONSIDERED TO BE RELEVANT**

| Category* | Citation of document, with indication, where appropriate, of the relevant passages | Relevant to claim No. |
|---|---|---|
| X | CN 102185354 A (WUXI SOUTHEAST VEHICLE TECHNOLOGY CO., LTD.) 14 September 2011 (2011-09-14)<br>  description, paragraphs 13-19, andfigures 1-3 | 1-10 |
| X | CN 112636417 A (WUHAN NO.2 SHIP DESIGN INSTITUTE (NO719 RESEARCH INSTITUTE OF CHINA SHIPBUILDING INDUSTRY CORP.)) 09 April 2021 (2021-04-09)<br>  description, paragraphs 19-34, and figures 1-3 | 1-10 |
| A | JP 2020046335 A (KEIHIN CORP.) 26 March 2020 (2020-03-26)<br>  entire document | 1-10 |
| A | CN 102340040 A (SHANDONG SACRED SUN POWER SOURCES CO., LTD.) 01 February 2012 (2012-02-01)<br>  entire document | 1-10 |
| A | CN 107359662 A (SOUTH CHINA UNIVERSITY OF TECHNOLOGY) 17 November 2017 (2017-11-17)<br>  entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2022** | **25 August 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/098774**

| Patent document cited in search report | | | Publication date (day/month/year) | Patent family member(s) | | | Publication date (day/month/year) |
|---|---|---|---|---|---|---|---|
| CN | 102185354 | A | 14 September 2011 | None | | | |
| CN | 112636417 | A | 09 April 2021 | None | | | |
| JP | 2020046335 | A | 26 March 2020 | None | | | |
| CN | 102340040 | A | 01 February 2012 | None | | | |
| CN | 107359662 | A | 17 November 2017 | CN | 207218279 | U | 10 April 2018 |

Form PCT/ISA/210 (patent family annex) (January 2015)

**REFERENCES CITED IN THE DESCRIPTION**

**Patent documents cited in the description**

• CN 202110832887